Europäisches Patentamt

European Patent Office

Office européen des brevets

(19)

(11) Numéro de publication : **0 285 515 B1**

(12) **FASCICULE DE BREVET EUROPEEN**

(45) Date de publication du fascicule du brevet :
16.10.91 Bulletin 91/42

(51) Int. Cl.⁵ : **C01G 43/06, C01B 17/45**

(21) Numéro de dépôt : **88400771.7**

(22) Date de dépôt : **30.03.88**

(54) **Procédé de préparation de tétrafluorure d'uranium et de fluorures desoufre par réduction d'hexafluorure d'uranium.**

(30) Priorité : **02.04.87 FR 8704634**

(43) Date de publication de la demande :
**05.10.88 Bulletin 88/40**

(45) Mention de la délivrance du brevet :
**16.10.91 Bulletin 91/42**

(84) Etats contractants désignés :
**DE GB IT NL**

(56) Documents cités :
**EP-A- 0 216 664**
**EP-A- 0 247 924**
**FR-A- 1 586 833**

(56) Documents cités :
**CHEMICAL ABSTRACTS, vol. 96, no. 24, 14 juin 1982, page 713, résumé no. 209824y, Columbus, Ohio, US; L.B. ASPREY et al.: "Preparation of pure sulfur tetrafluoride for synthesis of isotopically substituted compounds", & J. FLUORINE CHEM. 1982, 20(2), 277-80**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Lambard, Jacques 72, rue de Chalais F-94240 L'Hay-Les-Roses (FR)**

(74) Mandataire : **Mongrédien, André et al c/o BREVATOME 25, rue de Ponthieu F-75008 Paris (FR)**

## Description

La présente invention a pour objet un procédé de préparation de tétrafluorure d'uranium par réduction d'hexafluorure d'uranium.

Dans le cycle des combustibles nucléaires, les fluorures d'uranium occupent une place importante. En effet, l'hexafluorure d'uranium est utilisé pour l'enrichissement isotopique de l'uranium par le procédé de diffusion gazeuse car c'est le composé gazeux de plus forte tension de vapeur.

Le tétrafluorure d'uranium est un produit intéressant car il est solide à la température ambiante et constitue un produit intermédiaire dans la transformation de l'hexafluorure d'uranium en uranium métallique ou oxyde d'uranium $UO_2$ utilisé comme combustible dans les centrales nucléaires. C'est également un produit intermédiaire utilisé pour la préparation de $UCl_4$ et d'autres composés issus de $UF_6$.

Le tétrafluorure d'uranium est un produit solide peu réactif contrairement à l'hexafluorure d'uranium ; il constitue de ce fait une forme pratique de stockage de l'hexafluorure d'uranium qui sort appauvri des usines d'enrichissement isotopique.

Cependant, il est nécessaire que le tétrafluorure d'uranium présente certaines caractéristiques particulières pour qu'il soit intéressant.

Tout d'abord, il doit être exempt de fluorures d'uranium non entièrement réduits à la valence IV tels que $UF_5$, $U_2F_9$ ou $U_4F_{17}$, c'est-à-dire de fluorures de formule $UF_x$ avec $4 < x \leq 5$, qui rendent le produit chimiquement réactif et ne facilitent pas sa manutention.

De même, le tétrafluorure d'uranium ne doit pas comporter d'impuretés telles que des métalloïdes et des produits organiques. Ainsi, pour la métallurgie, on exige que sa teneur en carbone soit d'au plus 100 ppm ; pour la fabrication des céramiques $UO_2$, le tétrafluorure d'uranium doit être de pureté nucléaire.

De plus, dans les opérations de préparation de l'uranium métal par calcio- ou magnésiothermie, il est nécessaire d'utiliser $UF_4$ sous la forme d'une poudre de densité suffisante, typiquement d'au moins 2 à 3. De même des densités trop faibles conduisent à des pastilles d'oxyde d'uranium $UO_2$ de densité trop basse pour être utilisables comme élément combustible de réacteur nucléaire.

La préparation de $UF_4$ pour le stockage est moins exigente sur la densité ; cependant, même dans ce cas le tétrafluorure d'uranium ne doit pas se présenter sous la forme d'une poudre pulvérulente. D'une façon générale, les poudres peu denses rendent plus difficiles et moins sûres les opérations de collection, de transformation, de manipulation et de stockage de ce produit.

Il existe de nombreux procédés de réduction de l'hexafluorure d'uranium en tétrafluorure d'uranium, qui font appel à des agents réducteurs très variés.

Parmi ces procédés, on peut signaler ceux qui utilisent l'hydrogène ou l'ammoniac craqué comme agent réducteur, comme il est décrit dans les brevets US-A-2907629, FR-A-1396388 et FR-A-1394917. Cependant, ces procédés conduisent à la formation d'acide fluorhydrique gazeux, ce qui valorise mal le potentiel en fluor de l'hexafluorure d'uranium, car l'acide fluorhydrique est un produit courant qui peut être obtenu facilement par un grand nombre d'autres méthodes. De plus, avec ces procédés, quand l'$UF_4$ est produit sous la forme d'une poudre fine, il retient facilement sous une forme adsorbée l'acide fluorhydrique produit simultanément, créant une pollution du tétrafluorure d'uranium néfaste à certaines applications et qui demande un traitement annexe à haute température. Enfin, une autre difficulté qui apparaît avec l'utilisation d'hydrogène, est une hydrolyse partielle de l'hexafluorure d'uranium conduisant à la formation d'oxyfluorure d'uranyle $UO_2F_2$ qui pollue la poudre de tétrafluorure d'uranium formée. De plus, dans les opérations de réduction par l'hydrogène, il peut se former des fluorures d'uranium non entièrement réduits à la valence IV ou des fluorures mixtes d'uranium et de métaux provenant de la dégradation thermique de $UF_6$ avec les parois du réacteur, ce qui provoque l'accumulation d'impuretés solides et nécessite d'arrêter la production de tétrafluorure d'uranium pour nettoyer le réacteur. On peut éviter cet inconvénient en ajoutant du fluor ou du trifluorure de soufre comme le proposent respectivement les brevets US-A-2907629 et FR-A-1396388, mais ceci a l'inconvénient d'augmenter le coût de production de $UF_4$ alors que la valeur marchande du sous-produit formé HF n'est que très faible.

On connaît également des procédés de réduction de l'hexafluorure d'uranium par l'acide chlorhydrique ou différents halogénures comme il est décrit par T.A. O'DONNELL, D.F. STEWART et P. WILSON dans Inorg. Chem. 51438 1966, et par J.J KATZ et E. RABINOWITCH dans The Chemistry of Uranium, page 442, Mc GRAW-HILL N.Y. 1951.

Lorsqu'on utilise l'acide chlorhydrique, on obtient les mêmes inconvénients qu'avec l'hydrogène, c'est-à-dire la production d'acide fluorhydrique de faible valeur, la pollution du tétrafluorure d'uranium par l'acide fluorhydrique et la formation d'impuretés solides dans le réacteur.

Lorsqu'on utilise des halogénures tels que $PF_3$, $AsF_3$, $SiCl_4$, $AsCl_3$, $SbCl_3$, $BBr_3$ et $PBr_5$, on peut obtenir $UF_4$ à condition d'opérer avec un excès d'agent réducteur, mais ces agents réducteurs sont trop coûteux et les fluorures gazeux formés lors de la réaction de réduction ne présentent pas un marché industriel de la taille de celui de l'uranium.

Lorsque l'halogénure est le chlorure de thionyle SOCl₂, on peut obtenir UF₄ en réalisant la réduction en phase liquide mais la séparation entre le tétrafluorure d'uranium solide et le réactif liquide en excès est difficile à mettre en oeuvre. En revanche, si l'on opère en phase gazeuse, le produit formé est le pentafluorure d'uranium comme il est décrit par MONCELON et coll. dans C.R. Acad. Sci. Paris, 267, C 1485, 1968.

On connaît encore des procédés de réduction de l'hexafluorure d'uranium par du soufre ou des produits soufrés tels que $SO_2$, $SF_4$, $SCl_2$, qui ont l'avantage de conduire à la production de fluorures de soufre, en particulier de $SF_4$ qui est un sous-produit intéressant demandé dans l'industrie chimique, ou de $SF_6$ qui est également intéressant pour l'industrie électrique.

Des procédés de ce type sont décrits par J. AUBERT, B. COCHET-MUCHY et J.P. CUER dans le brevet FR-A-1586833 ; B. MONCELON, J. LUCAS et T. KIKINDAI dans C.R. Acad. Sci. Paris, 261, 1855, 1965 ; C.E. JOHNSON, J. FISHER et M.J. STEINDLER dans J. Am. Chem. Soc., 83, 1620, 1961 ; et L.B. ASPREY et E.M FOLTYN dans J. Fluor. Chem., 20, 277, 1982.

Cependant, avec ces agents réducteurs à base de soufre, il est difficile d'obtenir la réduction complète de $UF_6$ en $UF_4$. En effet, la réduction de l'hexafluorure d'uranium par le soufre en phase liquide ou en phase gazeuse est difficile à conduire et ne permet pas de réduire complètement $UF_6$ jusqu'au stade $UF_4$ sans être accompagnée d'une pollution par le soufre. L'utilisation de $SO_2$ comme agent réducteur nécessite d'opérer à une température de 380°C avec des durées importantes pour parvenir à $UF_4$. Aussi, cette réaction est trop lente pour pouvoir être utilisée à l'échelle industrielle. L'utilisation de $SF_4$ comme agent réducteur nécessite d'opérer à des températures supérieures à 500°C et les produits formés ne sont pas uniquement constitués de tétrafluorure d'uranium car des fluorures intermédiaires tels que $U_4F_{17}$ et $UF_5$ sont également formés dans le cas où l'on n'opère pas avec un net excès de $SF_4$ par rapport à $UF_6$. De plus, l'utilisation de températures supérieures à 500°C avec des temps de réaction de l'ordre de l'heure ne peut être retenue dans une installation industrielle en raison des problèmes importants de corrosion rencontrés avec les métaux à ces températures. L'utilisation de $SCl_2$ doit théoriquement conduire à l'obtention de $UF_4$. Cependant, comme il est décrit par L.B. ASPREY et E.M. FOLTYN, dans les conditions opératoires utilisées, c'est-à-dire à 92°C et en excès de $UF_6$, c'est-à-dire avec un rapport molaire $(SCl_2)/UF_6 < 0,25$ on obtient le pentafluorure d'uranium $UF_5$ et non le tétrafluorure d'uranium $UF_4$.

La présente invention a précisément pour objet un procédé de préparation de tétrafluorure d'uranium par réduction d'hexafluorure d'uranium, qui pallie ces différents inconvénients, car il permet :

— de produire du tétrafluorure d'uranium non pollué par l'agent réducteur ou les produits issus de la réaction,

— de réduire complètement $UF_6$ en $UF_4$ sans fluorures intermédiaires de formule $UF_x$,

— d'obtenir du tétrafluorure d'uranium ne comportant pas d'impuretés comme les métaux, le carbone, les oxydes ou les oxyfluorures,

— d'obtenir comme produit de la réaction du tétrafluorure de soufre $SF_4$ ayant un grand intérêt commercial et une forte valeur ajoutée,

— d'obtenir du $SF_4$ facile à séparer des constituants de la réaction,

— d'assurer la réduction de $UF_6$ en continu, et

— d'obtenir une poudre de $UF_4$ de forte densité.

Le procédé selon l'invention de préparation de tétrafluorure d'uranium par réduction en phase gazeuse d'hexafluorure d'uranium au moyen d'un agent réducteur, se caractérise en ce que l'on utilise un agent réducteur comprenant :

1°) — soit de la vapeur de soufre avec au moins un halogène et/ou un halogénure choisis parmi le chlore, le brome, $S_2F_2$, $SCl_2$, $S_2Cl_2$ et $S_2Br_2$,

2°) — soit au moins un halogénure de soufre choisi parmi $S_2F_2$, $SCl_2$, $S_2Cl_2$ et $S_2Br_2$, en quantités telles que le rapport R du nombre de moles d'atomes de soufre total présents lors de la réaction de réduction au nombre de moles de molécules de $UF_6$, $(S)/(UF_6)$, soit au moins de 0,6.

Le procédé de l'invention est particulièrement avantageux car il conduit à la formation d'une poudre de tétrafluorure d'uranium présentant les caractéristiques de pureté et de qualité requises pour le stockage et la conversion ultérieure en uranium métallique ou en $UO_2$, tout en transformant les deux atomes de fluor de la molécule d'hexafluorure d'uranium en un sous-fluorure de soufre comme $S_2F_2$ ou $SF_4$ qui peut être facilement isolé du milieu réactionnel et présente un intérêt commercial.

Le choix des agents réducteurs utilisés dans le procédé de l'invention a un effet bénéfique sur le déroulement de la réaction.

Ainsi, l'introduction d'autres halogènes ($Cl_2$ et $Br_2$) que le fluor dans le milieu réactionnel conduit au seul composé solide d'uranium recherché, c'est-à-dire à $UF_4$, à l'exclusion des autres halogénures d'uranium.

Lorsqu'on réalise la réduction par le soufre, la présence d'halogène libre, tel que $Cl_2$ et/ou $Br_2$, ou d'halo-

3

génures de soufre tels que $S_2F_2$, $SCl_2$, $S_2Cl_2$ et/ou $S_2Br_2$ empêche la pollution du tétrafluorure d'uranium produit par le soufre en excès, car dans les conditions de la réaction, le soufre réagit avec l'halogène libre utilisé ou libéré lors de la réduction de l'hexafluorure d'uranium.

Dans le procédé de l'invention, du monofluorure de soufre $S_2F_2$ est toujours présent en fin d'opération, et ceci est intéressant car $S_2F_2$ est un réducteur des fluorures d'uranium non complètement réduits à la valence IV tels que $UF_5$, $U_2F_9$ et $U_4F_{17}$ ; ainsi on empêche leur formation et on favorise la réduction complète de $UF_6$ en $UF_4$.

Dans le procédé de l'invention, on évite une pollution du tétrafluorure d'uranium. En effet, les impuretés réagissent préférentiellement avec $S_2F_2$ ou $SF_4$ présents dans le milieu réactionnel plutôt qu'avec $UF_6$ ; l'eau et l'oxygène sont ainsi éliminés en phase gazeuse sous forme de fluorure de thionyle $SOF_2$ plutôt que de réagir avec $UF_6$ pour donner $UO_2F_2$ qui pollue le tétrafluorure d'uranium et cause des colmatages dans le réacteur.

Dans l'invention, la présence de fluorures de soufre dans l'installation empêche également la formation de dépôts de composés d'uranium comme les oxydes et les oxyfluorures qui sont instables en présence de $SF_4$ à la température de réduction.

Dans l'invention, les produits gazeux formés ont de fortes tensions de vapeur ou bien se prêtent à une physidésorption facile. De ce fait, ils peuvent être facilement isolés de $UF_4$ qui n'est pas pollué par ces produits gazeux.

L'emploi dans le procédé de l'invention d'un réducteur conduisant à la formation de fluorures de soufre nécessite, comme dans le cas de l'hexafluorure d'uranium, d'opérer dans des conditions strictement anhydres qui sont également nécessaires pour $UF_6$, si l'on veut éviter sa décomposition en $UO_2F_2$ solide et HF gazeux.

Enfin, la réduction de $UF_6$ par ces agents réducteurs à base de soufre conduit à des fluorures de soufre de haute valeur ajoutée comme $S_2F_2$, $SF_4$ ou $SF_6$, qui ont de nombreuses applications dans l'industrie. En effet, $SF_6$ est utilisé comme milieu isolant dans l'industrie électrique et électrostatique, et $SF_4$ est un agent de fluoration utilisé en chimie organique de synthèse et surtout comme phase intermédiaire pour la préparation de $SF_6$.

On peut mettre en oeuvre le procédé de l'invention en réalisant la réaction de réduction en régime statique en réacteur clos, ou en régime dynamique en continu.

Lorsqu'on opère en régime statique, on peut remplir le réacteur et le vider après chaque opération. On peut aussi injecter les réactifs séquentiellement et extraire les produits formés de la même façon. On peut encore injecter les produits périodiquement et extraire en continu la phase gazeuse ainsi que les produits solides formés.

De préférence, on opère en continu en mettant en circulation dans un réacteur l'hexafluorure d'uranium gazeux et l'agent réducteur gazeux et en récupérant à la sortie du réacteur le tétrafluorure d'uranium solide produit.

Cependant, lorsqu'on opère en continu avec des débits importants, on ne peut obtenir du tétrafluorure d'uranium ayant la densité voulue car son temps de séjour dans le réacteur est trop bref.

On peut améliorer cette densité, soit en utilisant les techniques de lits fluidisés ou en suspension qui permettent d'accroître le temps de séjour du tétrafluorure d'uranium dans le réacteur, ou encore en effectuant un grossissement de la poudre après la synthèse dans un réacteur sous atmosphère neutre ou sous acide fluorhydrique anhydre à des températures de 700 à 1000°C, pendant 1 à 4 heures. Ce post-traitement permet d'accroître d'un facteur de 2 à 10 la densité apparente de la poudre de $UF_4$ en la portant à des valeurs comprises entre 3 et 3,7.

Cependant, l'utilisation de la technique des lits fluidisés ou la réalisation d'un post-traitement ont l'inconvénient d'être trop lents ou d'exiger des manipulations supplémentaires après la synthèse de $UF_4$.

On pourrait aussi améliorer la densité du tétrafluorure d'uranium produit en augmentant la température du milieu réactionnel. Cependant, il est difficile d'augmenter cette température en portant les parois du réacteur à des températures supérieures à 500°C en raison des problèmes de corrosion et de la pollution de l'$UF_4$ due à des fluorures métalliques mixtes d'uranium avec les métaux du réacteur.

Selon l'invention, on atteint ce résultat en introduisant également du fluor dans le réacteur.

En effet, dans les conditions de la réaction de réduction de l'hexafluorure d'uranium, l'agent réducteur utilisé (S et/ou halogénures de soufre) brûle dans le fluor gazeux, ce qui augmente la température du milieu réactionnel, les parois du réacteur pouvant être maintenues à une température nettement inférieure.

La combustion du soufre dans le fluor est une réaction bien connue pour être fortement exothermique ; elle conduit à la formation de $SF_6$ dans de grandes proportions avec de faibles concentrations de fluorures inférieurs comme $S_2F_2$, $SF_4$ et $S_2F_{10}$. Ainsi, la chaleur de formation de $SF_6$ a été mesurée comme étant de 262 kcal/mol de $SF_6$, soit $1{,}1 \cdot 10^3$ kJ/mol. Les combustions du monofluorure de soufre et des halogénures de soufre (chlorure et bromure) dans le fluor sont également exothermiques et conduisent à des produits stables $SF_4$ et $SF_6$. Ainsi, la chaleur de combustion de $S_2F_2$ dans $F_2$ est de 243 kcal/mol de $SF_6$ formé, soit de $10^3$ kJ/mol de

$SF_6$. Les chaleurs de réaction des halogénures de soufre avec le fluor sont d'environ 180 kcal/mol de $SF_4$ produit, soit 572 kJ/mol avec $SCl_2$, $S_2Cl_2$ et $S_2Br_2$.

Aussi, selon l'invention, on accroît la température du milieu réactionnel en superposant à la réaction de réduction, la combustion du soufre vapeur ou des halogénures de soufre dans le fluor gazeux.

De préférence, on introduit le fluor gazeux dans le réacteur en mélange avec l'hexafluorure d'uranium ou avec un gaz neutre comme l'azote ou l'argon. La quantité de fluor introduite est de préférence telle que le rapport molaire $(F_2)/(UF_6)$ soit inférieure à 0,8.

Généralement, on préchauffe le fluor seul ou en mélange avec l'argon, l'azote ou $UF_6$, à des températures de 100 à 300°C avant son introduction dans le réacteur.

On préchauffe également les autres réactifs introduits dans le réacteur à des températures allant de 200 à 500°C selon la nature de l'agent réducteur, la concentration en fluor et la densité souhaitée pour $UF_4$.

Selon l'invention, la réaction de réduction de $UF_6$ par les agents réducteurs mentionnés ci-dessus est réalisée en phase gazeuse avec un excès de réducteur pour obtenir le tétrafluorure d'uranium recherché, en opérant à des températures de 100 à 500°C.

La pureté chimique du tétrafluorure d'uranium produit est essentiellement déterminée par la nature et la proportion relative des réactifs, ainsi que par la température de la réaction ; mais elle ne dépend pas de la procédure expérimentale de conduite de la réaction si celle-ci est menée à son terme.

En revanche, la granulométrie et la densité du tétrafluorure d'uranium produit sont conditionnées par la procédure expérimentale.

Comme on l'a vu précédemment, on peut réaliser la réduction dans un réacteur clos en régime statique, ou en régime dynamique et en continu.

Dans ce dernier cas, on sépare la poudre de tétrafluorure d'uranium qui se trouve en suspension dans la phase gazeuse extraite du réacteur par des moyens classiques. Ceux-ci peuvent être constitués par des séparateurs cyclone, des filtres électrostatiques ou des milieux poreux filtrants. Pour permettre un grossissement de la poudre $UF_4$ dans le réacteur, on peut utiliser des techniques de fluidisation, qui permettent de contrôler les temps de séjour de la poudre dans le réacteur. Dans ce but, on ajoute généralement au milieu réactionnel un gaz vecteur neutre tel que l'azote ou l'argon, pour réaliser le lit fluidisé. Par ailleurs, pour accroître la densité du tétrafluorure d'uranium produit, on préchauffe les réactifs gazeux introduits dans le réacteur.

Comme on l'a vu précédemment, la réduction doit être réalisée de préférence en atmosphère strictement anhydre et l'on déshydrate de ce fait les réactifs, le gaz vecteur et les appareillages avant l'opération de réduction.

Le procédé de l'invention peut être mis en oeuvre de différentes façons selon que l'on utilise comme agent réducteur du soufre à l'état de vapeur ou des halogénures de soufre.

Dans tous les modes de mise en oeuvre du procédé de l'invention, on opère avec un excès de réducteur, c'est-à-dire avec un rapport $R = (S)/(UF_6)$ d'au moins 0,6 à une température de 100 à 500°C.

On précise que le rapport R est calculé à partir du nombre total d'atomes de soufre utilisés qui peuvent être introduits d'une part, sous forme de vapeur de soufre et, d'autre part, sous forme d'halogénure de soufre. Dans ce rapport R, (S) représente le rapport entre la masse totale de soufre utilisé et la masse d'un atomegramme de soufre, et $(UF_6)$ représente le rapport entre la masse de $UF_6$ introduit et la masse molaire de l'hexafluorure d'uranium.

Selon un premier mode de réalisation, on utilise comme agent réducteur de la vapeur de soufre à laquelle on ajoute du chlore et/ou du brome, avec un rapport $R = (S)/(UF_6)$ de 0,6 à 6, de préférence de 1 à 4, et un rapport molaire $(Cl_2)$ et/ou $(Br_2)/(UF_6)$ de 0,25 $(2R - 1)$ à $(2R - 1)$.

Dans ce premier mode de réalisation, l'usage d'un halogène (chlore et/ou brome) pour réaliser la réduction de $UF_6$ en phase gazeuse permet d'améliorer la cinétique de la réaction en phase gazeuze et d'éliminer la présence de soufre sur le solide cristallisé $UF_4$.

Ainsi, on peut opérer avec un excès de réducteur pour assurer la réduction complète de $UF_6$ en $UF_4$, sans être gêné par des fluorures non entièrement réduits tels que $UF_5$, $UF_9$, et $U_4F_7$.

Dans ce premier mode de mise en oeuvre du procédé de l'invention, les fluorures gazeux formés sont le monofluorure de soufre $S_2F_2$ et le tétrafluorure de soufre $SF_4$ en proportions relatives qui dépendent de l'importance de l'excès de réducteur et de la température. Les réactions correspondantes sont probablement les suivantes :

$$UF_6 + 1/4\ n\ S_{2n} \xrightarrow{X_2} UF_4 + 1/2\ SF_4 \qquad (1)$$

$$UF_6 + 1/n\ S_{2n} \xrightarrow{X_2} UF_4 + S_2F_2 \qquad (2)$$

dans lesquelles $S_{2n}$ représente le soufre à l'état de vapeur avec $1 \leq n \leq 4$ et $X_2$ représente l'halogène, chlore et/ou brome. L'excès de vapeur de soufre qui n'a pas réagi avec $UF_6$ selon les réactions (1) et (2) se combine avec l'halogène libre, chlore et/ou brome.

Dans ce premier mode de réalisation, on peut réaliser la réduction en réacteur clos chauffé et extraire les produits en fin de réaction. On peut également opérer en flux, ce qui est préférable pour une production continue de $UF_4$. Dans ce cas, la vapeur de soufre déshydratée peut être entraînée dans le réacteur par un courant de gaz neutre sec, comme l'azote ou l'argon, qui peut être préchauffé à température de 200 à 500°C. L'hexafluorure d'uranium et l'halogène, chlore ou brome, peuvent être injectés séparément ou ensemble. On les préchauffe de préférence à une température de 100 à 300°C pour améliorer la qualité du tétrafluorure d'uranium produit. On peut aussi incorporer l'halogène, chlore ou brome, au gaz porteur de la vapeur de soufre et remplacer ainsi une partie du gaz porteur par l'halogène.

Les fluorures de soufre produits lors de la réaction, qui sont $S_2F_2$ et $SF_4$, peuvent être extraits de la phase gazeuse sortant du réacteur par des méthodes classiques faisant appel soit aux propriétés physiques (condensation sélective, adsorption), soit aux propriétés chimiques (chromatographie, complexation sélective) de ces produits. Ainsi, on peut extraire en continu $SF_4$ par formation d'un complexe solide avec l'un des nombreux fluorures organiques tels que $BF_3$, $AsF_5$ et $SbF_5$. Ces complexes solides peuvent être extraits de la phase gazeuse à la sortie du réacteur et traités ensuite pour donner $SF_4$.

On peut aussi séparer $SF_4$ par des méthodes de chromatographie en phase gazeuse utilisant comme phase solide du fluorure de sodium recouvert de tétraméthylène sulfone ou d'éther diméthylique du triéthylène glycol, ou des résines fluorocarbonées qui retiennent sélectivement $SF_4$.

Le monofluorure de soufre $S_2F_2$ est thermodynamiquement instable et se dismute facilement en phase liquide pour donner $SF_4$ et du soufre qui cristallise. On peut donc le soutirer du mélange gazeux sous la forme de $SF_4$ comme précédemment.

Dans ce premier mode de réalisation de l'invention, il est nécessaire de limiter les débits en agent réducteur car la vapeur de soufre a une faible tension de vapeur (30 torr soit 4000 Pa à 280°C), ce qui rend possible les condensations de soufre dans les canalisations d'arrivée.

Aussi, pour éviter cet inconvénient, on préfère généralement remplacer tout ou partie du soufre par un agent réducteur formé d'un composé moléculaire du soufre, ce qui est le cas dans les autres modes de réalisation décrits ci-après.

Ainsi, selon un deuxième mode de réalisation de l'invention, on utilise comme agent réducteur le monofluorure de soufre $S_2F_2$ avec un rapport $R = (S)/(UF_6)$ de 0,7 à 4.

Dans ce cas, la réaction principale de réduction correspond au schéma suivant :

$$UF_6 + 1/3\ S_2F_2 \rightarrow UF_4 + 2/3\ SF_4 \qquad (3)$$

On produit ainsi du tétrafluorure d'uranium et du fluorure de soufre $SF_4$ comportant éventuellement de petites quantités de $SF_6$ quand on opère aux températures les plus élevées.

La réaction peut être réalisée en réacteur clos chauffé, mais l'on peut également opérer en flux continu ou pulsé, en écoulement lent. Dans ce dernier cas, l'hexafluorure d'uranium et le monofluorure de soufre seront introduits séparément, de préférence après avoir été préchauffés à une température de 100 à 500°C pour améliorer la densité du tétrafluorure d'uranium formé. On peut aussi opérer en lit fluidisé en utilisant un courant de gaz neutre séché comme l'azote qui sera aussi préchauffé à une température de 100 à 500°C.

Selon un troisième mode de réalisation de l'invention, on utilise comme agent réducteur du monofluorure de soufre $S_2F_2$ auquel on ajoute de la vapeur de soufre. Dans ce cas, le rapport du nombre de moles d'atomes de soufre à l'état de vapeur $(S)_v$ au nombre de moles de molécules de $UF_6$ est au plus égal à 1 et le rapport $R = (S)/(UF_6)$ est de préférence de 0,7 à 4.

Dans ce troisième mode de réalisation, la réduction correspond à la réaction (3) et on régénère du $S_2F_2$ selon la réaction en phase vapeur :

$$UF_6 + 1/n\ S_{2n} \rightarrow UF_4 + S_2F_2 \quad (4)$$

ce qui est un moyen d'accroître la concentration en élément réducteur $S_2F_2$.

Cependant, ce troisième mode de réalisation reste sensible à une pollution possible de $UF_4$ par le soufre. Aussi, il est important que la teneur en vapeur de soufre libre ne dépasse pas la teneur en $UF_6$, c'est-à-dire que le rapport $(S)_v/(UF_6)$ soit au plus de 1.

Comme précédemment, on peut réaliser la réaction en vase clos ou en flux. Dans ce dernier cas, les réactifs sont de préférence préchauffés et le soufre à l'état de vapeur peut être introduit par un courant d'azote ou par le gaz $S_2F_2$ qui passe sur du soufre chauffé.

Selon un quatrième mode de réalisation de l'invention, on utilise comme agent réducteur du monofluorure de soufre $S_2F_2$ en présence d'un halogène choisi parmi le chlore et/ou le brome. Dans ce cas, le rapport R = $(S)/(UF_6)$ est de préférence de 0,7 à 4.

Dans ce cas, la réaction de réduction correspond à la réaction (3) du deuxième mode de réalisation et la présence d'halogène, $Cl_2$ et/ou $Br_2$ permet d'améliorer la pureté du $UF_4$ produit vis-à-vis du soufre, principalement quand on opère avec une valeur élevée du rapport R. La quantité d'halogène introduite n'est donc pas critique ; généralement elle est telle que le rapport molaire $(Cl_2)$ et/ou $(Br_2)/(S_2F_2)$ soit inférieur à 0,5, par exemple de 0,3 à 0,4.

Dans ce mode de réalisation, l'halogène chlore et/ou brome, peut être introduit seul ou en mélange avec l'un des réactifs : $UF_6$ ou $S_2F_2$. On peut aussi l'introduire dans un flux de gaz neutre si on désire augmenter les temps de séjour de $UF_4$ dans le réacteur par la technique des lits fluidisés.

Selon un cinquième mode de réalisation de l'invention, on utilise comme agent réducteur du monofluorure de soufre $S_2F_2$ et de la vapeur de soufre en présence de chlore et/ou de brome.

Dans ce cas, en plus de la réaction (3) du deuxième mode de réalisation on a les réactions (1) et (2) du premier mode de réalisation pour produire le tétrafluorure d'uranium. Le $S_2F_2$ formé selon la réaction (2) est ainsi disponible pour réagir avec $UF_6$ selon la réaction (3).

Dans ce cinquième mode de réalisation, la quantité de soufre apportée sous forme de vapeur de soufre est déterminante pour la part de l'halogène, chlore ou brome, à ajouter. Généralement, les quantités d'halogène et de soufre à l'état de vapeur sont telles que le rapport $(Cl_2)$ et/ou $(Br_2)/(S)_v$ où $(S)_v$ représente le nombre de moles d'atomes de soufre à l'état de vapeur, ait une valeur de 0,05 à 1,5. Le rapport R = $(S)/(UF_6)$ est de préférence de 0,7 à 4.

On peut réaliser la réaction dans un réacteur clos ou en régime dynamique. Dans ce dernier cas, la vapeur de soufre peut être introduite, soit avec le gaz $S_2F_2$, soit avec un flux de gaz neutre comme l'azote. On peut également y incorporer l'halogène, chlore et/ou brome, juste avant l'introduction dans le réacteur.

Selon un sixième mode de réalisation de l'invention, on utilise comme agent réducteur, au moins un halogénure de soufre choisi parmi $SCl_2$, $S_2Cl_2$ et $S_2Br_2$ avec un rapport R = $(S)/(UF_6)$ de 0,6 à 6. Les réactions qui se produisent correspondent aux schémas réactionnels suivants dans lesquels $X_2$ représente $Cl_2$ ou $Br_2$.

$$UF_6 + 1/4\ S_2X_2 \rightarrow UF_4 + 1/2\ SF_4 + 1/4\ X_2 \quad (5)$$

$$UF_6 + S_2X_2 \rightarrow UF_4 + S_2F_2 + X_2 \quad (6)$$

$$UF_6 + 1/2\ SCl_2 \rightarrow UF_4 + 1/2\ SF_4 + 1/2\ Cl_2 \quad (7)$$

$$UF_6 + 2SCl_2 \rightarrow UF_4 + S_2F_2 + 2Cl_2 \quad (8)$$

De préférence, on utilise un rapport R = $(S)/(UF_6)$ de 1 à 4.

On peut préparer les halogénures de soufre utilisés comme agent réducteur en faisant passer un courant d'halogène sur du soufre chauffé ou sur du soufre fondu. On utilise généralement le bromure $S_2Br_2$ seul et le ou les chlorures $SCl_2$ et/ou $S_2Cl_2$. Dans le cas des chlorures, on obtient le monochlorure de soufre $S_2Cl_2$ en opérant avec un excès de soufre avant de fractionner pour éviter sa dismutation. Pour obtenir le bichlorure de soufre, on opère au contraire en excès de chlore sous pression réduite. Comme il est difficile d'isoler chacun des chlorures de soufre et que leur comportement individuel vis-à-vis de la réduction de $UF_6$ est proche, on utilise généralement un mélange de monochlorure et de bichlorure de soufre aussi riche que possible en monochlorure de soufre qui est l'agent le plus réducteur.

Dans ce sixième mode de réalisation de l'invention, on n'est pas limité par la tension de vapeur du soufre et l'on peut donc utiliser de fortes pressions pour les réactifs. Ceci offre une plus grande facilité de mise en oeuvre au niveau des introductions dans le réacteur, notamment lorsqu'on opère en régime dynamique. Par ailleurs, l'emploi d'halogénures de soufre (chlorures et bromure) n'entraine pas la formation d'autres composés uranifères que $UF_4$, et ne pollue pas le tétrafluorure d'uranium par des composés soufrés.

Selon un septième mode de réalisation de l'invention, on utilise comme agent réducteur de la vapeur de soufre et au moins un halogénure de soufre choisi parmi $SCl_2$, $S_2Cl_2$ et $S_2Br_2$ avec un rapport $R = (S)/(UF_6)$ de 0,6 à 6.

Dans ce cas, on utilise donc comme agent réducteur de la vapeur de soufre conjointement avec les halogénures de soufre, généralement $S_2Cl_2$ et/ou $SCl_2$, ou $S_2Br_2$ seul. Si l'on opère comme précédemment en excès de réducteur, on forme du tétrafluorure d'uranium solide $UF_4$ et une phase gazeuse composée des fluorures de soufre $S_2F_2$ et $SF_4$ dans des proportions qui dépendent des conditions expérimentales telles que la température, le rapport R et les dérivés halogénés utilisés. Les réactions qui ont lieu, sont les réactions (1), (2) et (5) à (8).

L'intérêt de ce septième mode de réalisation est d'introduire un excès de soufre sous la forme de vapeur de soufre à un halogénure de soufre à base de chlore ou de brome déjà formé, sans apporter l'halogène sous la forme libre. Ainsi, on substitue à l'halogène libre, chlore ou brome, des réactions (1) et (2) du premier mode de réalisation, un halogénure de soufre, soit un chlorure comme $S_2Cl_2$, $SCl_2$ ou leurs mélanges, soit le monobromure $S_2Br_2$. Dans ce cas, on n'est pas limité par la tension de vapeur du soufre comme dans le premier mode de réalisation et on réduit la quantité d'halogène introduit sous la forme combinée d'un halogénure de soufre comme dans le sixième mode de réalisation.

Dans ce septième mode de réalisation, il est important de veiller à ce que l'on ait une quantité relative suffisante d'halogénure de soufre par rapport à la quantité de vapeur de soufre introduite dans le réacteur, c'est-à-dire une quantité d'halogène $X_2$ (chlore et/ou brome) engagée dans l'halogénure de soufre rapportée au soufre total qui se situe dans la gamme $(X_2)/(S)$ de 0,25 $(2 - R^{-1})$ à $(2 - R^{-1})$

De préférence on prépare l'halogénure de soufre juste avant son introduction dans le réacteur et on sature en soufre le monochlorure ou le monobromure de soufre formé.

Comme précédemment, on peut réaliser la réduction en continu. Dans ce cas, il est intéressant d'extraire le tétrafluorure de soufre produit par complexation avec un fluorure inorganique et de recycler la phase gazeuse dans le réacteur après avoir ajusté sa composition en agent réducteur soufré. Ceci peut être obtenu en faisant transiter la phase gazeuse sur du soufre chauffé. Elle comprendra ainsi, en plus des constituants initiaux, du monofluorure de soufre $S_2F_2$ et éventuellement du fluorure de thionyle $SOF_2$ comme impuretés. La présence de $S_2F_2$ n'est pas gênante pour la suite de la réduction de $UF_6$, comme on l'a vu dans le deuxième mode de réalisation de l'invention.

Selon un huitième mode de réalisation de l'invention, on utilise comme agent réducteur du monofluorure de soufre $S_2F_2$ et au moins un halogénure de soufre choisi parmi $S_2Cl_2$, $SCl_2$ et $S_2Br_2$ avec un rapport $R = (S)/(UF_6)$ de 0,6 à 6.

Dans ce huitième mode de réalisation, les réactions qui ont lieu sont les réactions (5) à (8) du sixième mode de réalisation et la réaction (3) du cinquième et/ou du deuxième mode de réalisation. On peut effectuer la réduction dans les conditions décrites précédemment, notamment celles données pour le sixième mode de réalisation.

Selon un neuvième mode de réalisation de l'invention, on utilise comme agent réducteur du monofluorure de soufre $S_2F_2$, de la vapeur de soufre et au moins un halogénure de soufre choisi parmi $S_2Cl_2$, $SCl_2$ et $S_2Br_2$, avec un rapport $R = (S)/(UF_6)$ de 0,6 à 6.

Dans ce neuvième mode de réalisation, la réduction est réalisée conjointement selon les réactions (5) à (8), (3), (1), (2) et éventuellement la réaction (4). La part d'halogène $X_2$, chlore ou brome, engagé dans l'halogénure de soufre sera de préférence telle que le rapport $(X_2)/(S)$ soit de 0,25 $(2 - R^{-1})$ à $(2 - R^{-1})$ comme dans le septième mode de réalisation.

On peut réaliser la réduction dans les conditions décrites précédemment.

Les exemples suivants sont donnés bien entendu à titre non limitatif pour illustrer l'invention.

EXEMPLE 1 : Réduction par du soufre vapeur en présence de chlore.

Dans cet exemple, on utilise le premier mode de réalisation de l'invention, et l'on opère dans un réacteur tubulaire en Monel® qui est muni d'un manomètre. On condense tout d'abord 1 g de soufre ($3.10^{-2}$ mole d'atomes) dans le réacteur tubulaire. On réalise ensuite un prétraitement du réacteur et du soufre pour éliminer les impuretés préjudiciables à la réaction en injectant de l'$UF_6$ gazeux à 50°C sous 1000 Pa et on renouvelle cette opération. On introduit alors $1,5.10^{-2}$ mole de $UF_6$ gazeux, ce qui correspond à un rapport $R = (S)/(UF_6) = 2$, et du chlore gazeux en quantité telle que le rapport $(Cl_2)/(UF_6)$ soit de 1,5. On chauffe alors le réacteur à 350°C et l'on recueille, en fin de réaction, une phase gazeuse composée de fluorures de soufre, $SF_4$, $S_2F_2$ et $SOF_2$,

dans le rapport 25/75/5, des chlorures de soufre $S_2Cl_2$ et $SCl_2$ ainsi que du chlore libre.

L'hexafluorure d'uranium a complètement réagi et on extrait du réacteur 4 g d'un solide vert cristallisé qui est identifié aux rayons X comme étant du $UF_4$.

Ce tétrafluorure d'uranium ne contient ni fluorures $UF_x$ avec $4 < x \leq 5$, ni oxyfluorures, ni impuretés, ni soufre, ni chlorures. Le fluorure de thionyle $SOF_2$ qui apparaît comme impureté gazeuse dans les produits sortant du réacteur, provient d'une réaction des fluorures de soufre $S_2F_2$ ou $SF_4$ avec des traces d'humidité ou d'oxydes.

EXEMPLE COMPARATIF 1 : Réduction par du soufre vapeur sans adjonction d'halogène.

Dans cet exemple, on utilise le même réacteur et le même mode opératoire que dans l'exemple 1 mais sans ajouter de chlore. Ainsi, on condense tout d'abord dans le réacteur 0,5 g de soufre ($1,5.10^{-2}$ mole d'atomes). On réalise ensuite un prétraitement du réacteur et du soufre comme dans l'exemple 1 et on renouvelle l'opération. On introduit alors $1,5.10^{-2}$ mole de $UF_6$ gazeux, ce qui correspond à un rapport $R = (S)/(UF_6) = 1$. On chauffe le réacteur à 300°C. A la fin de la réaction, on obtient une phase gazeuse composée de $SF_4$, $S_2F_2$ et $SOF_2$ dans le rapport 90/7/3. L'hexafluorure d'uranium a complètement réagi car il n'est pas détecté par spectroscopie infrarouge. Le produit solide déposé sur les parois du réacteur est un mélange de fluorure d'uranium solide et de soufre cristallisé. Après extraction du soufre, on obtient 3,9 g de $UF_4$ et 0,21 g de soufre qui n'a pas réagi.

EXEMPLE 2 : Réduction par $S_2F_2$.

On utilise dans cet exemple le deuxième mode de réalisation de l'invention et l'on opère en régime statique comme dans l'exemple 1. On introduit ainsi dans le réacteur, $1,5.10^{-2}$ mole de $UF_6$ et $1,5.10^{-2}$ mole de $S_2F_2$ puis on chauffe à une température de 300°C. Le rapport $R$ est ainsi égal à 2.

En fin de réaction quand la pression reste stable, on enlève par pompage la phase gazeuse qui est composée de $SF_4$, $S_2F_2$ et $SOF_2$ dans les proportions de 32/60/8 sans $UF_6$, et on recueille dans le réacteur 4,3 g de $UF_4$. La réduction de $UF_6$ est ainsi complète.

EXEMPLE 3 : Réduction par du soufre et du $S_2F_2$ en présence de $Cl_2$.

On utilise dans cet exemple le cinquième mode de réalisation de l'invention et on opère dans le même réacteur que celui de l'exemple 1. On condense tout d'abord 0,5 g de soufre ($1,5.10^{-2}$ mole d'atomes) dans le réacteur, puis on y introduit $10^{-2}$ mole de $S_2F_2$ et $1,5.10^{-2}$ mole de $UF_6$. On chauffe à la température de 300°C, en présence de $4.10^{-3}$ mole de $Cl_2$. Le rapport des réactifs utilisés est ainsi tel que $R = (S)/(UF_6)$ est de 2,3 et que $(Cl_2)/(S)_v$ est de 0,26.

On récupère, en fin de réaction, 4,2 g de $UF_4$ qui ne contient ni fluorures d'uranium supérieurs, ni impuretés à base de soufre. La phase gazeuse recueillie comprend $SF_4$, $S_2F_2$ et $SOF_2$ dans les proportions respectives de 30/55/10 ainsi que des chlorures de soufre formés pendant la réaction.

EXEMPLE 4 : Réduction par $SCl_2$.

Dans cet exemple, on utilise le sixième mode de réalisation de l'invention et le même réacteur que dans l'exemple 1. On introduit dans ce réacteur 5,2 g d'hexafluorure d'uranium et $1,5.10^{-2}$ mole de chlorure de soufre $SCl_2$ et on chauffe le réacteur à 300°C. On a ainsi un rapport $(S)/(UF_6)$ égal à 1. On laisse la réaction se poursuivre jusqu'à épuisement de $UF_6$ et on recueille en fin d'opération une phase gazeuse comprenant des fluorures de soufre $SF_4$, $S_2F_2$ et $SOF_2$, dans le rapport 60/35/5, des chlorures de soufre $S_2Cl_2$ et $SCl_2$ ainsi que du chlore. On ne détecte pas d'hexafluorure d'uranium par spectroscopie infrarouge. Le produit solide est constitué par 4,5 g de tétrafluorure d'uranium qui ne contient ni fluorures supérieurs, ni chlorures, ni soufre. Les cristaux de $UF_4$ ont une taille comprise entre 1 et 8 µm, et leur densité est de 3,0 environ.

EXEMPLE 5 : Réduction par de la vapeur de soufre et du $S_2Cl_2$.

On utilise dans cet exemple le septième mode de réalisation de l'invention et on effectue la réduction en régime dynamique, en écoulement continu, dans un réacteur tubulaire chauffé à 350°C.

On introduit dans le réacteur, d'une part 90 g/h d'hexafluorure d'uranium préchauffé à 200°C et, d'autre part, des chlorures de soufre obtenus en saturant en soufre un courant de chlore sur un bain de soufre liquide maintenu à 200°C, ce qui forme une phase gazeuse réductrice composée de $S_2Cl_2$ et de vapeur de soufre. La part relative de vapeur de soufre ne représente que quelques % par rapport au monochlorure de soufre $S_2Cl_2$. La pression de vapeur de soufre est de l'ordre de 500 Pa et on injecte cette phase gazeuse réductrice à raison de 80 g/h environ après l'avoir préchauffé à 300°C en mélange avec de l'argon dans un rapport volumique $S_2Cl_2$/argon de 30 :70. Le rapport $R = (S)/(UF_6)$ est d'environ 2,5.

On forme ainsi 76 g/h de tétrafluorure d'uranium qui contient 75,2% d'uranium, sans composés intermédiaires du type $UF_x$ et sans chlorures.

EXEMPLE 6 : Réduction par du chlorure de soufre saturé en soufre, avec addition de fluor à l'hexafluorure d'uranium.

Dans cet exemple, on utilise le septième mode de réalisation de l'invention en opérant en continu comme dans l'exemple 5 et en ajoutant de plus du fluor à l'hexafluorure d'uranium afin d'augmenter la densité du tétrafluorure d'uranium produit. On utilise un réacteur tubulaire dans lequel on injecte 0,4 mol/h d'un mélange d'hexafluorure d'uranium et de fluor préchauffé à 200°C dans les proportions $(F_2)/(UF_6)$ de 0,5. On injecte également dans le réacteur une phase réductrice préchauffée à 300°C constituée de chlorure de soufre saturé en soufre, c'est-à-dire formée de $S_2Cl_2$ à raison de 0,45 mol/h de $S_2Cl_2$ et de vapeur de soufre de sorte que le rapport $R = (S)/(UF_6)$ est d'environ 3,5. L'exothermicité de la réaction assure la réduction de $UF_6$ qui est complètement transformé en $UF_4$, et l'on recueille à la sortie du réacteur 86 g/h de $UF_4$ pour 100 g/h de $UF_6$ introduit.

La masse spécifique apparente du tétrafluorure d'uranium ainsi produit est de 3,2 g/cm³. Il ne contient pas de composés fluorés intermédiaires, et il est exempt de chlorures et de soufre. La phase gazeuse sortant du réacteur est constituée majoritairement de $S_2Cl_2$ qui n'a pas réagi, des fluorures $S_2F_2$, $SF_4$ et $SF_6$ ainsi que de chlore. On ne détecte pas d'hexafluorure d'uranium dans les gaz extraits.

## Revendications

1. Procédé de préparation de tétrafluorure d'uranium par réduction en phase gazeuse de l'hexafluorure d'uranium au moyen d'un agent réducteur, caractérisé en ce que l'on utilise un agent réducteur comprenant :
   1°) — soit de la vapeur de soufre avec au moins un halogène et/ou un halogénure choisi parmi $Cl_2$, $Br_2$, $S_2F_2$, $SCl_2$, $S_2Cl_2$ et $S_2Br_2$,
   2°) — soit au moins un halogénure de soufre choisi parmi $S_2F_2$, $SCl_2$, $S_2Cl_2$ et $S_2Br_2$,
   en quantités telles que le rapport R du nombre total de moles d'atomes de soufre présents lors de la réaction de réduction au nombre de moles de molécules de $UF_6$, $(S)/(UF_6)$, soit au moins de 0,6.

2. Procédé selon la revendication 1, dans lequel on réalise la réaction de réduction en continu en mettant en circulation dans un réacteur l'hexafluorure d'uranium gazeux et l'agent réducteur gazeux, et en récupérant à la sortie du réacteur le tétrafluorure d'uranium solide produit, caractérisé en ce que l'on introduit également du fluor dans le réacteur.

3. Procédé selon la revendication 2, caractérisé en ce que la quantité de fluor ajoutée est telle que le rapport molaire $(F_2)/(UF_6)$ soit inférieur à 0,8.

4. Procédé selon l'une quelconque des revendications 1 à 3, caractérisé en ce que l'on utilise comme agent réducteur de la vapeur de soufre à laquelle on ajoute du chlore et/ou du brome avec un rapport $R = (S)/(UF_6)$ de 0,6 à 6 et un rapport molaire $(Cl_2)$ et/ou $(Br_2)/(UF_6)$ de 0,25 $(2R-1)$ à $(2R-1)$.

5. Procédé selon l'une quelconque des revendications 1 à 3, caractérisé en ce que l'on utilise comme agent réducteur le monofluorure de soufre $S_2F_2$ avec un rapport $R = (S)/(UF_6)$ de 0,7 à 4.

6. Procédé selon l'une quelconque des revendications 1 à 3, caractérisé en ce que l'on utilise comme agent réducteur de la vapeur de soufre et du monofluorure de soufre $S_2F_2$ avec un rapport $(S)_v/(UF_6)$ du nombre de moles d'atomes de soufre à l'état de vapeur $(S)_v$ au nombre de moles de $UF_6$ au plus égal à 1 et un rapport $R = (S)/(UF_6)$ de 0,7 à 4.

7. Procédé selon l'une quelconque des revendications 1 à 3, caractérisé en ce que l'on utilise comme agent réducteur du $S_2F_2$ en présence de $Cl_2$ et/ou $Br_2$ avec un rapport $R = (S)/(UF_6)$ de 0,7 à 4.

8. Procédé selon l'une quelconque des revendications 1 à 3, caractérisé en ce que l'on utilise comme agent réducteur du monofluorure de soufre $S_2F_2$ et de la vapeur de soufre en présence de chlore et/ou de brome avec un rapport $R = (S)/(UF_6)$ de 0,7 à 4, et un rapport $(Cl_2)$ et/ou $(Br_2)/(S)_v$, où $(S)_v$ représente le nombre de moles d'atomes de soufre à l'état de vapeur de 0,05 à 1,5.

9. Procédé selon l'une quelconque des revendications 1 à 3, caractérisé en ce que l'on utilise comme agent réducteur au moins un halogénure de soufre choisi parmi $SCl_2$ $S_2Cl_2$ et $S_2Br_2$ avec un rapport $R = (S)/(UF_6)$ de 0,6 à 6.

10. Procédé selon l'une quelconque des revendications 1 à 3, caractérisé en ce que l'on utilise comme agent réducteur de la vapeur de soufre et au moins un halogénure de soufre choisi parmi $SCl_2$, $S_2Cl_2$ et $S_2Br_2$ avec un rapport R = (S)/(UF$_6$) de 0,6 à 6 et un rapport $(X_2)$/(S) dans lequel $(X_2)$ représente le nombre de moles de chlore et/ou de brome présentes sous forme d'halogénures et (S) représente le nombre total de moles d'atomes de soufre, allant de 0,25 $(2 - R^{-1})$ à $(2 - R^{-1})$.

11. Procédé selon l'une quelconque des revendications 1 à 3, caractérisé en ce que l'on utilise comme agent réducteur du monofluorure de soufre $S_2F_2$ et au moins un halogénure de soufre choisi parmi $S_2Cl_2$, $SCl_2$ et $S_2Br_2$ avec un rapport R = (S)/(UF$_6$) de 0,6 à 6.

12. Procédé selon l'une quelconque des revendications 1 à 3, caractérisé en ce que l'on utilise comme agent réducteur de la vapeur de soufre, du monofluorure de soufre $S_2F_2$ et au moins un halogénure de soufre choisi parmi $S_2Cl_2$, $SCl_2$ et $S_2Br_2$ avec un rapport R = (S)/(UF$_6$) de 0,6 à 6, et un rapport $(X_2)$/(S) dans lequel $(X_2)$ représente le nombre de moles de $Cl_2$ et/ou $Br_2$ présentes sous forme d'halogénure et (S) représente le nombre total de moles d'atomes de soufre, allant de 0,25 $(2 - R^{-1})$ à $(2 - R^{-1})$.

13. Procédé selon l'une quelconque des revendications 1 à 12, caractérisé en ce que l'on réalise la réaction de réduction à une température de 100 à 500°C.

14. Utilisation du procédé selon l'une quelconque des revendications 1 à 13 pour la préparation de fluorure de soufre choisi parmi $SF_4$, $S_2F_2$ et $SF_6$.


**Patentansprüche**

1. Verfahren zum Herstellen von Urantetrafluorid durch Reduktion in Gasphase von Uranhexafluorid mittels eines Reduktionsmittels, **dadurch gekennzeichnet,** daß man ein Reduktionsmittel verwendet, das enthält :

1. Entweder Schwefeldampf mit wenigstens einem Halogen und/oder ein Halogenid, das aus $Cl_2$, $Br_2$, $S_2F_2$, $SCl_2$, $S_2Cl_2$ und $S_2Br_2$ ausgewählt ist,

2. oder wenigstens ein Schwefelhalogenid, das unter $S_2F_2$, $SCl_2$, $S_2Cl_2$ und $S_2Br_2$ ausgewählt ist, in solchen Mengen, daß das Verhältnis von R zur Gesamtzahl der Schwefelatommole bei der Reduktionsreaktion zur Zahl der Molekülmole von UF$_6$, (S)/(UF$_6$), wenigstens 0,6 ist.

2. Verfahren nach Anspruch 1, bei dem man die Reduktionsreaktion kontinuierlich ausführt, indem man in einem Reaktor gasförmiges Uranhexafluorid und das gasförmige Reaktionsmittel in Zirkulation versetzt und man am Ausgang des Reaktors das erzeugte feste Urantetrafluorid abzieht, **dadurch gekennzeichnet,** daß man auch Fluor in den Reaktor einführt.

3. Verfahren nach Anspruch 2, **dadurch gekennzeichnet,** daß die Menge hinzugefügten Fluors derart ist, daß das Molverhältnis $(F_2)$/(UF$_6$) kleiner als 0,8 ist.

4. Verfahren nach einem der Ansprüche 1-3, **dadurch gekennzeichnet,** daß man als Reaktionsmittel Schwefeldampf verwendet, dem man Chlor und/oder Brom mit einem Verhältnis R = (S) / (UF$_6$) von 0, 6 bis 6 und einem Molverhältnis $(Cl_2)$ und/oder $(Br_2)$/(UF$_6$) von 0,25 (2R – 1) bis (2R – 1) hinzufügt.

5. Verfahren nach einem der Ansprüche 1-3, **dadurch gekennzeichnet,** daß man als Reaktionsmittel das Schwefelmonofluorid $S_2F_2$ mit einem Verhältnis R = (S)/(UF$_6$) von 0,7 bis 4 verwendet.

6. Verfahren nach einem der Ansprüche 1-3, **dadurch gekennzeichnet,** daß man als Reduktionsmittel Schwefeldampf und Schwefelmonofluorid $S_2F_2$ mit einem Verhältnis $(S)_v$/(UF$_6$) der Anzahl der Schwefelatommole in Dampfphase $(S)_v$ zur Zahl der Mole von UF$_6$ von höchstens gleich 1 und einem Verhältnis R = (S)/(UF$_6$) von 0,7 bis 4 verwendet.

7. Verfahren nach einem der Ansprüche 1-3, **dadurch gekennzeichnet,** daß man als Reduktionsmittel $S_2F_2$ in Anwesenheit von $Cl_2$ und/oder $Br_2$ mit einem Verhältnis R = (S)/(UF$_6$) von 0,7 bis 4 verwendet.

8. Verfahren nach einem der Ansprüche 1-3, **dadurch gekennzeichnet,** daß man als Reduktionsmittel Schwefelmonofluorid $S_2F_2$ und Schwefeldampf in Anwesenheit von Chlor und/oder Brom mit einem Verhältnis R = (S)/(UF$_6$) von 0,7 bis 4 und einem Verhältnis $(Cl_2)$ und/oder $(Br_2)$/$(S)_v$ verwendet, wobei $(S)_v$ die Anzahl der Schwefelatommole im Dampfzustand von 0,05 bis 1,5 darstellt.

9. Verfahren nach einem der Ansprüche 1-3, **dadurch gekennzeichnet,** daß man als Reduktionsmittel wenigstens ein Schwefelhalogenid verwendet, das auch $SCl_2$, $S_2Cl_2$ und $S_2Br_2$ ausgewählt ist mit einem Verhältnis R = (S)/(UF$_6$) von 0,6 bis 6.

10. Verfahren nach einem der Ansprüche 1-3, **dadurch gekennzeichnet,** daß man als Reduktionsmittel Schwefeldampf und wenigstens ein Schwefelhalogenid verwendet, das aus $SCl_2$, $S_2Cl_2$ und $S_2Br_2$ ausgewählt ist mit einem Verhältnis R = (S)/(UF$_6$) von 0,6 bis 6 und einem Verhältnis $(X_2)$/(S), wobei $(X_2)$ die Anzahl der Chlor- und/oder Brom-Mole darstellt, die in Form von Halogeniden vorhanden sind und (S) die Gesamtzahl der Schwefelatommole darstellt, von 0,25 $(2 - R^1)$ bis $(2 - R^1)$ reichend.

11. Verfahren nach einem der Ansprüche 1-3, **dadurch gekennzeichnet,** daß man als Reduktionsmittel Schwefelmonofluorid $S_2F_2$ und wenigstens ein Schwefelhalogenid verwendet, das aus $S_2Cl_2$, $SCl_2$ und $S_2Br_2$

ausgewählt ist mit einem Verhältnis R = (S)/(UF$_6$) von 0,6 bis 6.

12. Verfahren nach einem der Ansprüche 1 bis 3, **dadurch gekennzeichnet,** daß man als Reduktionsmittel Schwefeldampf, Schwefelmonofluorid S$_2$F$_2$ und wenigstens ein Schwefelhalogenid verwendet, das aus S$_2$Cl$_2$, SCl$_2$ und S$_2$Br$_2$ ausgewählt ist mit einem Verhältnis R = (S)/(UF$_6$) von 0,6 bis 6 und einem Verhältnis (X$_2$)/(S), in dem (X$_2$) die Anzahl der Mole von Cl$_2$ und/oder Br$_2$ darstellt, die in Halogenidform vorhanden sind und (S) die Gesamtzahl der Schwefelatommole darstellt, von 0,25 (2 − R$^{-1}$) bis (2 − R$^{-1}$) reichend.

13. Verfahren nach einem der Ansprüche 1-12, **dadurch gekennzeichnet,** daß man die Reduktionsreaktion bei einer Temperatur von 100 bis 500°C ausführt.

14. Verwendung des Verfahrens nach einem der Ansprüche 1-13 für die Herstellung von Schwefelfluorid, das aus SF$_4$, S$_2$F$_2$ und SF$_6$ ausgewählt ist.


## Claims

1. Process for the preparation of uranium tetrafluoride by gaseous phase reduction of uranium hexafluoride by means of a reducing agent, characterized in that use is made of a reducing agent including :

1°) — either sulphur vapor with at least one halogen and/or a halide chosen from among Cl$_2$, Br$_2$, S$_2$F$_2$, SCl$_2$, S$_2$Cl$_2$ and S$_2$Br$_2$,

2°) — or at least one sulphur halide chosen from among S$_2$F$_2$, SCl$_2$, S$_2$Cl$_2$ and S$_2$Br$_2$,

in quantities such that the ratio R of the total number of moles of sulphur atoms present during the reduction reaction to the number of moles of molecules of UF$_6$, (S)/(UF$_6$) is least 0.6.

2. Process according to claim 1, wherein the reduction reaction is performed continuously by circulating in a reactor the gaseous uranium hexafluoride and the gaseous reducing agent and by recovering at the reactor outlet the solid uranium tetrafluoride produced, characterized in that fluorine is also introduced into the reactor.

3. Process according to claim 2, characterized in that the added fluorine quantity is such that the molar ratio (F$_2$)/(UF$_6$) is below 0.8.

4. Process according to any one of the claims 1 to 3, characterized in that the reducing agent used is sulphur vapor to which is added chlorine and/or bromine with a ratio R = (S)/ (UF$_6$) of 0.6 to 6 and a molar ratio (Cl$_2$) and/or (Br$_2$)/(UF$_6$) of 0.25 (2R − 1) to (2R − 1).

5. Process according to any one of the claims 1 to 3, characterized in that the reducing agent used is sulphur monofluoride S$_2$F$_2$ with a ratio R = (S)/(UF$_6$) of 0.7 to 4.

6. Process according to any one of the claims 1 to 3, characterized in that the reducing agent used is sulphur vapor and sulphur monofluoride S$_2$F$_2$ with a ratio (S)$_v$/(UF$_6$) of the number of moles of sulphur atoms in the vapor state (S)$_v$ to the number of moles of UF$_6$ of at the most equal to 1 and a ratio R = (S)/(UF$_6$) of 0.7 to 4.

7. Process according to any one of the claims 1 to 3, characterized in that the reducing agent used is S$_2$F$_2$ in the presence of Cl$_2$ and/or Br$_2$ with a ratio R = (S)/(UF$_6$) of 0.7 to 4.

8. Process according to any one of the claims 1 to 3, characterized in that the reducing agent used is sulphur monofluoride S$_2$F$_2$ and sulphur vapor in the presence of chlorine and/or bromine with a ratio R = (S)/(UF$_6$) of 0.7 to 4 and a ratio (Cl$_2$ and/or (Br$_2$)/(S)$_v$, in which (S)$_v$ represents the number of moles of sulphur atoms in the vapor state of 0.05 to 1.5.

9. Process according to any one of the claims 1 to 3, characterized in that the reducing agent used is at least one sulphur halide chosen from among SCl$_2$, S$_2$Cl$_2$ and S$_2$Br$_2$ with a ratio R = (S)/(UF$_6$) of 0.6 to 6.

10. Process according to any one of the claims 1 to 3, characterized in that the reducing agent used is sulphur vapor and at least one sulphur halide chosen from among SCl$_2$, S$_2$Cl$_2$ and S$_2$Br$_2$ with a ratio R = (S)/(UF$_6$) of 0.6 to 6 and a ratio (X$_2$)/(S) in which (X$_2$) represents the number of moles of chlorine and/or bromine present in the form of halides and (S) represents the total number of moles of sulphur atoms between 0.25 (2 − R$^{-1}$) to (2 − R$^{-1}$).

11. Process according to any one of the claims 1 to 3, characterized in that the reducing agent used is sulphur monofluoride (S$_2$F$_2$) and at least one sulphur halide chosen from among S$_2$Cl$_2$, SCl$_2$ and S$_2$Br$_2$ with a ratio R = (S)/(UF$_6$) of 0.6 to 6.

12. Process according to any one of the claims 1 to 3, characterized in that the reducing agent used is sulphur vapor, sulphur monofluoride S$_2$F$_2$ and at least one sulphur halide chosen from among S$_2$Cl$_2$, SCl$_2$ and S$_2$Br$_2$ with a ratio R = (S)/(UF$_6$) of 0.6 to 6 and a ratio. (X$_2$)/(S) in which (X$_2$) represents the number of moles of Cl$_2$ and/or Br$_2$ present in halide form and (S) represents the total number of moles of sulphur atoms between 0.25 (2 − R$^{-1}$) and (2 − R$^{-1}$).

13. Process according to any one of the claims 1 to 12, characterized in that the reduction reaction is performed at a temperature of 100 to 500°C.

14. Use of the process according to any one of the claims 1 to 13 for the production of sulphur fluoride

chosen from among $SF_4$, $S_2F_2$ and $SF_6$.